# EUROPEAN PATENT SPECIFICATION

(11) **EP 1 570 935 B1**
(45) Date of publication and mention of the grant of the patent: **21.05.2008**
(21) Application number: 05101756.4
(22) Date of filing: 07.03.2005
(51) Int. Cl.: B23D 47/04, B28D 7/04, B28D 1/04

(54) **Method and device for sawing slices of natural stone**
Verfahren und Vorrichtung zum Zersägen von Naturstein in Scheiben
Procédé et dispositif pour le sciage de pierre naturelle en tranches

(30) Priority: 05.03.2004 BE 200400121
(43) Date of publication of application: 07.09.2005
(73) Proprietor: VAN AELST, Filip, 2980 Zoersel (BE)
(72) Inventor: VAN AELST, Filip, 2980 Zoersel (BE)
(74) Representative: Callewaert, Jean

(56) References cited:
- EP-A- 0 895 842
- CH-A- 175 598
- NL-A- 8 603 119
- US-A- 3 292 310
- US-A- 3 844 269
- US-A1- 2003 172 916
- PATENT ABSTRACTS OF JAPAN vol. 004, no. 057 (M-009), 26 April 1980 (1980-04-26) -& JP 55 024875 A (HORIGUCHI MITSUO), 22 February 1980 (1980-02-22)

## Description

The present invention concerns a method according to the preamble of independent claim 1 for sawing blocks of natural stone, concrete or stone in general, whereby a block is individually grasped and is moved along at least one sawing unit with at least one saw blade in order to saw this block into slices. The invention particularly concerns a method for sawing erratic blocks of natural stone into slices, such as cobbles.

The present invention also concerns a device for sawing blocks out of stone according to the preamble of independent claim 9. Such a method and such a device are known from EP0895842.

The known sawing devices according to the state of the art do not make it possible to saw blocks with an irregular shape into slices that are all practically just as thick in a single step, in a precise and simple manner.

The documents NL 8 603 119 and EP 0 895 842 are, in particular relating to the sawing of blocks of very regular form having at least a parallel top and bottom surface.

The document US 3 844 269 discloses a device for sawing stones of irregular form. However, it is not possible to saw such stones into regular parallel slices with this device.

The invention aims to provide a method and a device which make it possible to saw slices of a uniform thickness out of blocks or erratic blocks of natural stone with varying shapes and dimensions in a single operation, whereby the life of the used saw blades is considerably increased.

This aim is achieved by a method according to the combination of features of independent claim 1 and a device according to the combination of features of independent claim 9. The dependent claims disclose further preferred embodiments of the invention.

According to a preferred embodiment of the method according to the invention, said clamp follows a circular path along successive sawing units which are mounted along this circular path, such that the saw blades of a subsequent sawing unit further deepen de corresponding saw cut which has been formed by the saw blades of the preceding sawing unit.

In an advantageous manner, the clamp follows a circular path which is situated in a vertical plane.

According to a special embodiment of the device according to the invention, said fingers are elastically deformable, independently from one another.

According to an advantageous embodiment of the device according to the invention, said means make it possible to move the clamp according to a circular path, whereby successive sawing units are provided along this circular path which contain at least one saw blade, whereby the saw blades of a sawing unit further deepen the corresponding saw cut which has been formed by the saw blades of the preceding sawing unit between said fingers.

According to an interesting embodiment of the device according to the invention, positioning means are provided to place said block in a predetermined position in the clamp.

Other particularities and advantages of the invention will become clear from the following description of a few special embodiments of the method and the device according to the invention; this description is given as an example only and does not limit the scope of the claimed protection in any way; the figures of reference used hereafter refer the accompanying drawings.
Figure 1 is a schematic side view of an interesting embodiment of the device according to the invention.
Figure 2 is a schematic view from above according to line II-II of a part of a clamp from figure 1.
Figure 3 is a schematic side view of a sawing unit with a part of a clamp according to this embodiment.
Figure 4 is a schematic view from above of a clamp with positioning means according to the invention.
Figure 5 is a schematic side view of a clamp according to another embodiment of the invention.
Figure 6 is a schematic representation of a saw blade and a saw cut formed according to a preferred embodiment of the method according to the invention.

In the different drawings, the same figures of reference refer to identical or analogous elements.

The invention in general concerns a method and a device for sawing blocks of store such as cobbles into slices, such that these slices can be used for example as a floor covering. More particularly, the invention makes it possible to obtain slices with a uniform thickness, such that they can be glued for example directly on a base and must not be laid in a mortar bed. The latter is for example usually the case when a floor covering of natural stone is being laid. A conventional floor made of tiles of pure natural stone must indeed be laid in a bed so as to obtain a flat floor surface, since the thickness of the different tiles varies somewhat.

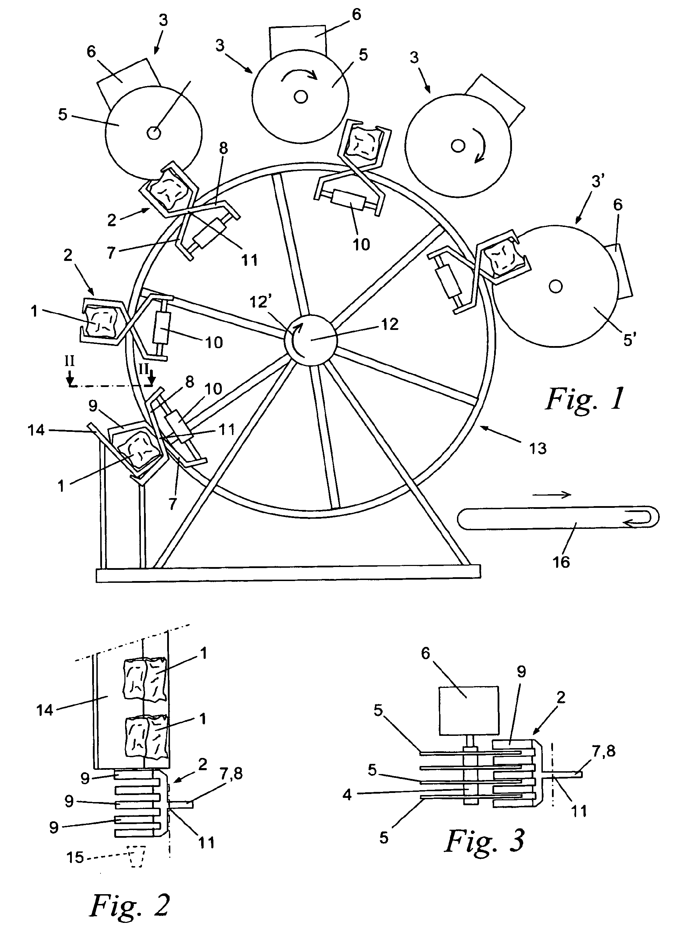

A device for applying this method according to the invention is schematically represented in figure 1. Thus, in order to saw a cobble 1 into slices, or more in general a block of natural stone or concrete, this cobble 1 is grasped individually by means of a clamp 2 and it is moved along successive sawing units 3.

Every sawing unit 3 contains a number of parallel, circular saw blades 5, mounted on a fixed, common shaft 4. The distances between the saw blades 5 situated next to each other are preferably identical and they correspond to the required thickness of the slices to be sawn. The saw blades 5 are driven via the shaft 4 by an electric motor 6. This can also be done by means of a pneumatic, a hydraulic or another motor. A view from above of such a sawing unit 3 is represented in figure 3.

In an advantageous manner, flanges with a calibrated thickness are provided around said shaft 4 between the successive saw blades 5 of one and the same sawing unit 3. This makes it possible to always saw blocks of natural stone into slices having the same thickness. Moreover, the use of such flanges makes sure that the distances between the saw blades 5 of the different sawing units 3 are adjusted to each other almost to perfection.

Said clamp 2 contains two arms 7 and 8 which are hinge-mounted in relation to each other. On one far end of these arms 7 and 8 are provided fingers 9 which extend next to each other at a short distance from each other. The distance between the fingers 9 of one and the same arm 7 or 8 is somewhat larger than the thickness of the saw blades 5, such that they can rotate freely in between.

Further, the free end of the fingers 9 of this one arm 7 is bent and directed towards the free end of the fingers 9 of the other arm 9, which are bent as well, such that a claw is formed in which a cobble 1 can be clamped.

The other far ends of both arms 7 and 8 are connected to each other via a hydraulic piston 10, as represented in figure 1, which makes it possible to rotate the arms 7 and 8 in relation to a common hinge point 11 so as to be able to move said fingers 9 of both arms 7 and 8 towards each other in order to close the clamp 2 or to move them away from each other in order to open this clamp 2.

The fingers 9 are preferably made somewhat elastic, such that they can deform independently from each other when grasping the cobble 1. In an advantageous manner, the sides of the fingers 9 turned towards the cobble 1 are for example coated with an elastic plastic or with rubber, such that, when clamping the cobble 1 between the fingers 9, the latter will fit almost entirely against the surface thereof. These fingers 9 are possibly made of a spring metal. Each of the fingers 9 can also be hinge-mounted in relation to the respective arm 7 or 8, such that they are pressed against the surface of the cobble 1, independently from each other via a corresponding mechanical spring which is not represented.

Thanks to the use of such elastic fingers 9, cobbles 1 with a very irregular form can be firmly grasped in a clamp 2. Moreover, this also makes sure that, after a cobble 1 has been sawn through, the formed separate slices retain a fixed position in the clamp 2.

Thus, by the method according to the invention, a cobble 1 is grasped individually in said clamp 2 between the fingers 9, and it is moved along at least one, but preferably successive sawing units 3. The latter preferably contain several saw blades 5, as mentioned above. However, in some cases, the sawing units may contain only one saw blade 5.

When the clamp 2 is moved along the sawing units 3, a saw cut is formed in the cobble 1 by the saw blades 5 between two fingers 9 situated next to each other, such that the cobble 1 remains clamped by fingers 9 on either side of each saw blade 5. These fingers 9 extend parallel to the saw blades 5.

The successive sawing units 3 are mounted such that the saw blades of a sawing unit 3 further deepen the corresponding saw cut which has been formed by the preceding sawing unit 3. The sawing unit 3' along which the clamp 2 with the cobble 1 is guided last contains saw blades 5' having a thickness which is somewhat larger than the thickness of the saw blades 5 of the preceding sawing units 3. Thus, these saw blades 5' remove any possible sawing traces made by the preceding saw blades 5, and the cobble 1 is sawn through entirely. The slices formed of a cobble 1 are then held parallel to each other between the fingers 9 of the clamp 2.

When the clamp 2 is moved with the cobble 1 along the sawing units 3, it preferably follows a circular path. The sawing units 3 which are successively mounted along this circular path are each time situated at a smaller distance to the middle point 12 thereof, such that every subsequent sawing unit 3, as already mentioned, further deepens the formed saw cut.

When the saw blades 5 of the different sawing units 3 have the same diameter, for example the shaft 4 of a certain sawing unit 3 can be mounted at a shorter distance from the middle point of said circular path than the preceding sawing unit 3. In the case where the diameter of the saw blades 5 of a certain sawing unit 3 is larger than that of the saw blades 5 of the preceding sawing unit 3, the distance between the shaft 4 and said middle point 12 can remain the same for these sawing units 3.

In order to load the saw blades 5 as symmetrically as possible, such that the risk of damages is as small as possible, they are preferably mounted such that they extend in a vertical plane. Thus, the circular path which is followed by the clamp 2 is situated in a vertical plane as well. The shaft 4 of the saw blades then extends horizontally.

The device thus may have means to move the clamp 2 in a circular movement along said sawing units 3. The clamp 2 is mounted on the perimeter of a wheel 13 which rotates around the horizontal axis 12 thereof in the direction of the arrow 12', and which is driven to this end by a motor which is not represented in the drawings. On this wheel 13 are preferably mounted several identical clamps which are evenly distributed over the perimeter of the wheel 13, such that the device makes it possible to saw through cobbles 1 in a continuous manner.

To this end, transport means are provided with a horizontal groove 14 to supply cobbles 1. The groove 14 extends crosswise to the wheel 13, such that this groove 14 opens with one of its far ends onto a side of the clamps 2 at the time that the latter, as a result of the rotation of the wheel 13, are moved along this groove 14. The clamp 2, which is situated opposite to said far end of the groove 14, is opened and a cobble 1 is pushed between the fingers 9 of the clamp by means of a pusher which is not represented in the drawings. Next, the clamp 2 is closed so as to hold the cobble 1 between the corresponding fingers 9.

Since cobbles are usually somewhat beam-shaped or cubical, the groove 14, in an advantageous manner, has an L-shaped cross section with a first plane which extends radially in relation to said circular path, whereas a second plane joins said first plane at right angles. This second plane thus extends in a direction which is parallel to a tangent of this circular path. This enables us to make sure that the successive cobbles are always brought in the same position between the fingers 9 and, more particularly, rest with one of their sides against the fingers 9.

While a clamp 2 is being moved together with a cobble 1 according to a circular path towards a first sawing unit 3, a subsequent clamp 2 is offered to the far end of the groove 14 in order to grasp a subsequent cobble 1.

As is schematically represented in figure 2 by means of a dashed line, a stop 15 is preferably provided on the side of the clamp 2 opposite to the side thereof which joins the groove 14. Thus, a cobble 1 is pushed up to this stop 15 in a direction crosswise to the plane of said circular path in order to correctly position the clamp 2. In this manner it is possible to push the successive cobbles, which must be sawn through, over the same distance in the successive clamps 2.

As already mentioned above, the clamps 2 are moved along the successive sawing units 3 and 3' so as to saw the corresponding cobbles 1 into slices. After the cobbles 1 have been sawn through entirely by means of the last sawing unit 3', the clamp 2 is moved further with the formed slices according to said circular path up to a conveyor belt 16 which is situated at a lower level, where the clamp 2 is opened, such that said slices can be discharged and packed in a manner known as such.

The clamp 2 then moves further in an open position according to said circular path to a far end of the groove 14 where a subsequent cobble 1 is being grasped.

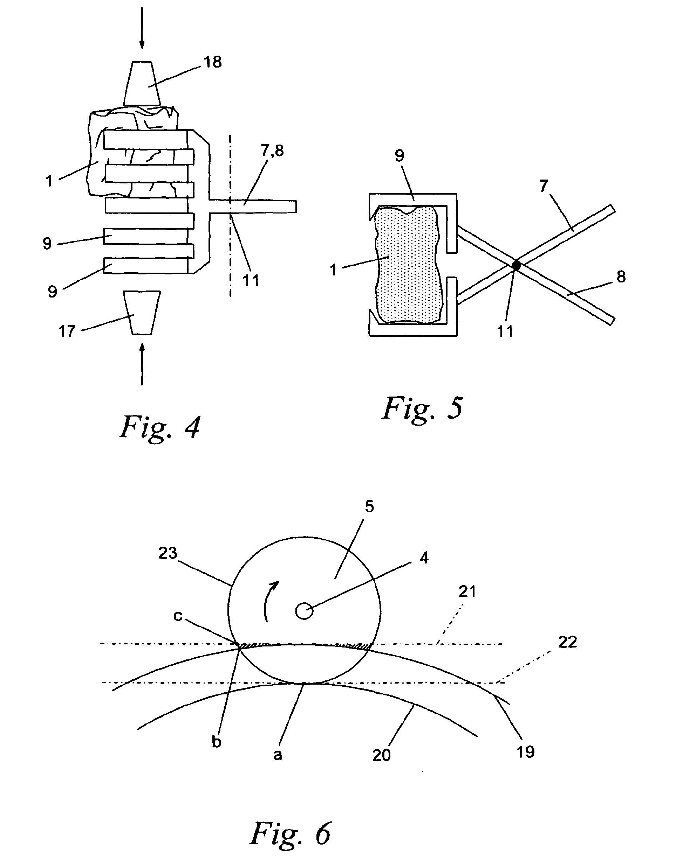

Figure 4 schematically represents an alternative embodiment of positioning means which make it possible to place a cobble 1 in a predetermined position in the clamp 2. By means of these positioning means, a cobble 1 is placed in the clamp 2 in relation to a reference, such as for example the middle of the fingers 9, or the axial position of a specific saw blade 5.

These positioning means comprise two stops 17 and 18 which extend on either side of the clamp 2, and thus of the corresponding cobble 2. These two stops are moved towards each other, after the cobble 1 has been put in the clamp 2, in a direction crosswise to the plane of said circular path. Hereby is made sure, for example, that said reference is always situated practically in the middle between both stops. When it is found that each of the stops 17 and 18 pushes against the corresponding side of the cobble 1, the latter, as a consequence, is centred in relation to said reference, and the clamp 2 is closed. The stops 17 and 18 to this end work in conjunction with a sensor, for example, which controls the closing of the clamp 2.

Figure 5 represents an alternative embodiment of a clamp 2 according to the invention, whereby the fingers 9 are L-shaped.

As the cobbles 1 are moved according to a circular path towards the successive saw blades 5, it is assumed that the life of the latter is somewhat longer than in the case of a movement of the cobbles 1 according to a straight path towards the saw blades 5. This is illustrated in a very schematic manner by means of figure 6, where a saw blade 5 is represented together with the circular path 19 of a point situated on the surface of the cobble 1 where the saw cut is formed. The depth of the formed saw cut is schematically illustrated by an arc 20 which is concentric to the circular path 19. The sawing depth is then the distance between the curves 19 and 20.

A dot and dash line also schematically illustrates the surface of a cobble which is guided along the saw blade 5 following a straight path 21. The depth of the saw cut is schematically represented by means of a corresponding dot and dash line 22 which is parallel to line 21.

It is clear that when one saws according to a straight path 21, wear will occur on the perimeter 23 of the saw blade 5 on the one hand, and on the lateral surfaces of the saw blade which get into contact with stone dust being discharged or with the lateral surfaces of the saw cut on the other hand.

When the arc of the perimeter 23 of the saw blade 5 is thus considered, which makes contact with the cobble, it is found that, when the cobble is moved according to a circular path, this is the arc *ab,* whereas when the cobble is moved according to a straight path, this is the arc *ac.* Consequently, there is less contact with the saw blade 5 when sawing the cobble 1 according to a circular path 19 than when sawing according to a straight path 21 for a similar sawing depth.

Further, the contact surface between the saw blade 5 and the cobble is larger in case of a straight path 21 than in case of a circular path 19. The hatched surface in the figure represents this difference in contact surface.

As saw blades rotate at a relatively high rotational speed in order to saw cobbles, the life of the saw blade is lengthened considerably by moving the cobble according to a circular path along the saw blade. According to this circular path, the saw blade is loaded less in order to saw to the same depth than this is the case with a straight path, so that energy is saved as well.

Of course, the invention is not restricted to the above-described embodiments of the method and device for sawing stones such as cobbles, bricks or blocks of natural stone or concrete, but several variants can be considered within the scope of the claims.

Thus, for example, between the saw blades 5 of the successive sawing units 3, non-represented guiding plates may extend along which the cobbles 1 are guided via the formed saw cut between the successive corresponding saw blades 5.

Also the clamp 2 may assume different shapes. The fingers 9 may be bent, for example, when round erratic blocks must be sawn through. More particularly, the shape of the clamp 2 can be adjusted to the shape of the blocks to be sawn.

Although it is described above that the clamp 2 is moved with a cobble 1 according to a circular path along the sawing units 3, it is of course also possible to move the clamp 2 for example according to a straight line along correspondingly placed sawing units 3. However, the clamp 2 is preferably moved according to a convex path such as for example a circular path or an elliptic path.

If the successive sawing units each contain only one saw blade, they can be shifted at right angles to the direction of movement of the clamped blocks, each time over a distance which is equal to the required thickness of the slices to be sawn. In this manner, a particular saw blade must saw through the entire block in a single operation.

## Claims

1. Method for sawing blocks (1) of natural stone, concrete or stone in general, whereby a block (1) is grasped individually and is moved along at least one sawing unit (3) with at least one saw blade (5) in order to saw this block (1) into slices, whereby said block (1) is grasped with a clamp (2) provided with fingers (9) which is moved with said block (1) along the sawing unit (3), in such a manner that the block (1) is clamped on both sides of said saw blade (5) when a saw cut is being provided in the block (1), the fingers (9) extending parallel to said saw blade (5), **characterised in that** said clamp (2) has two groups of fingers, whereby the fingers of one group are opposed to those of the other group such that the block (1) is clamped in the space enclosed by both groups of fingers, wherein the fingers (9) are pressed against the surface of the block (1) independently from each other, and whereby the slices formed after sawing are held parallel to each other between the fingers (9) of the clamp (2).

2. Method according to claim 1, **characterised in that** said fingers (9) deform elastically, independently from each other, when said block (1) is being grasped.

3. Method according to claim 1 or 2, **characterised in that** said clamp (2) follows a bent, preferably closed path, in particular a circular path, during the movement along said sawing unit (3).

4. Method according to any one of claims 1 to 3, **characterised in that** said clamp (2) follows a circular path along successive sawing units (3) which are mounted along this circular path, such that the saw blades (5) of a subsequent sawing unit (3) further deepen the corresponding saw cut, which has been formed by the saw blades (5) of the preceding sawing unit (3).

5. Method according to claim 4, **characterised in that** the clamp (2) follows a circular path which is situated in a vertical plane.

6. Method according to any one of claims 1 to 5, **characterised in that** said block (1) is placed against a stop (15) before it is grasped by said clamp (2).

7. Method according to claim 6, **characterised in that** said block (1) is pushed up against said stop (15) in a direction which is crosswise to the plane of said saw blades (5), whereby this block (1) is then grasped by said clamp (2) and is guided along said sawing unit (3).

8. Method according to any one of claims 1 to 5, **characterised in that** said block (1) is centred in relation to a reference in a direction which is crosswise to the direction of movement of said clamp (2) before the block (1) is grasped by the clamp (2) and is moved along the sawing unit (3).

9. Device for sawing blocks (1) out of stone, in particular natural stone or concrete, with at least a sawing unit (3) comprising at least one saw blade (5) and at least a clamp (2) for grasping an individual block (1), whereby means are provided to move this clamp (2) along said sawing unit (3) in order to saw the block (1) into slices, more particularly for applying the method according to any one of claims 1 to 8, **characterised in that** said clamp (2) has fingers (9) situated next to each other in between which a block (1) can be held, whereby the distance between fingers (9) situated next to each other is at least equal to the thickness of said saw blade (5) and whereby said means are such that they make it possible to provide a saw cut with the saw blade (5) in said block (1) concerned between two fingers (9) situated next to each other, wherein the fingers (9) extend parallel to said saw blade (5), said clamp (2) having two groups of fingers (9), whereby the fingers of one group are opposed to those of the other group such that the fingers (9) of both groups enclose a space in which an individual block (1) can be placed, wherein the fingers (9) can be pressed against the surface of the block (1) independently from each other such that the slices formed after sawing are held parallel to each other between the fingers (9) of the clamp (2).

10. Device according to claim 9, **characterised in that** the fingers (9) of the one group can be moved in relation to those of the other group in order to make it possible to hold said block (1) in said space between both groups of fingers (9) situated next to each other.

11. Device according to claim 9 or 10, **characterised in that** said fingers (9) are elastically deformable, independently from one another.

12. Device according to any one of claims 9 to 11, **characterised in that** said means are such that they make it possible to move the clamp (2) according to a circular path, whereby successive sawing units (3) are provided along this circular path which each comprise at least one saw blade (5), whereby the saw blades (5) of a sawing unit (3) further deepen the corresponding saw cut which has been made by the saw blades (5) of the preceding sawing unit (3) between said fingers (9).

13. Device according to any one of claims 9 to 12, **characterised in that** said means are made such that said clamp (2) is moved in a practically vertical plane along said sawing unit (3).

14. Device according to any one of claims 9 to 13, **characterised in that** positioning means are provided to put said block (1) in a predetermined position in relation to the clamp (2).

15. Device according to any one of claims 9 to 14, **characterised in that** it comprises a stop (15) which works in conjunction with said clamp (2).

16. Device according to claim 15, **characterised in that** transport means (14) are provided to move said block (1) up against said stop (15) in a direction which is crosswise to the plane of said saw blades (5).

17. Device according to any one of claims 9 to 16, **characterised in that** the side of said fingers (9) which is to be pushed against a block (1) is coated with an elastic material, more particularly with rubber.

18. Device according to any one of claims 9 to 17, **characterised in that** said fingers (9) are made of spring steel.

## Patentansprüche

1. Verfahren zum Sägen von Blöcken (1) aus Naturstein, Beton oder Stein im Allgemeinen, bei dem ein Block (1) einzeln ergriffen wird und an wenigstens einer Sägeeinheit (3) mit wenigstens einem Sägeblatt (5) entlangbewegt wird, um diesen Block (1) in Scheiben zu Sägen, wobei der Block (1) mit einer Klemmvorrichtung (2) ergriffen wird, die mit Fingern (9) versehen ist und die mit dem Block (1) an der Sägeeinheit (3) entlangbewegt wird, derart, dass der Block (1) auf beiden Seiten des Sägeblattes (5) eingeklemmt ist, wenn ein Sägeschnitt in dem Block (1) durchgeführt wird, wobei sich die Finger (9) parallel zum Sägeblatt (5) erstrecken, **dadurch gekennzeichnet, dass** die Klemmvorrichtung (2) zwei Gruppen von Fingern aufweist, wobei die Finger einer Gruppe jenen der anderen Gruppe gegenüberliegen, so dass der Block (1) in dem von beiden Fingergruppen umschlossenen Raum eingeklemmt wird, wobei die Finger (9) unabhängig voneinander gegen die Oberfläche des Blockes (1) gedrückt werden und wobei die gebildeten Scheiben nach dem Sägen parallel zueinander zwischen den Fingern (9) der Klemmvorrichtung (2) festgehalten werden.

2. Verfahren nach Anspruch 1, **dadurch gekennzeichnet, dass** sich die Finger (9) unabhängig voneinander elastisch verformen, wenn der Block (1) ergriffen wird.

3. Verfahren nach Anspruch 1 oder 2, **dadurch gekennzeichnet, dass** die Klemmvorrichtung (2) während der Bewegung entlang der Sägeeinheit (3) einer gebogenen, vorzugsweise geschlossenen Bahn folgt, insbesondere einer Kreisbahn.

4. Verfahren nach einem der Ansprüche 1 bis 3, **dadurch gekennzeichnet, dass** die Klemmvorrichtung (2) einer Kreisbahn entlang aufeinanderfolgenden Sägeeinheiten (3) folgt, die entlang dieser Kreisbahn so angebracht sind, dass die Sägeblätter (5) einer nachfolgenden Sägeeinheit (3) den entsprechenden Sägeschnitt, der von den Sägeblättern (5) der vorhergehenden Sägeeinheit (3) gebildet wurde, weiter vertiefen.

5. Verfahren nach Anspruch 4, **dadurch gekennzeichnet, dass** die Klemmvorrichtung (2) einer Kreisbahn folgt, die in einer vertikalen Ebene liegt.

6. Verfahren nach einem der Ansprüche 1 bis 5, **dadurch gekennzeichnet, dass** der Block (1) gegen einen Anschlag (15) angeordnet wird, bevor er von der Klemmvorrichtung (2) ergriffen wird.

7. Verfahren nach Anspruch 6, **dadurch gekennzeichnet, dass** der Block (1) in einer Richtung, die quer zur Ebene der Sägeblätter (5) ist, gegen den Anschlag (15) geschoben wird, wobei dieser Block (1) anschließend von der Klemmvorrichtung (2) ergriffen und an der Sägeeinheit (3) entlanggeführt wird.

8. Verfahren nach einem der Ansprüche 1 bis 5, **dadurch gekennzeichnet, dass** der Block (1) in einer Richtung, die quer zur Richtung der Bewegung der Klemmvorrichtung (2) ist, in Bezug auf eine Referenz zentriert wird, bevor der Block (1) von der Klemmvorrichtung (2) ergriffen und an der Sägeeinheit (3) entlangbewegt wird.

9. Vorrichtung zum Sägen von Blöcken (1) aus Stein, insbesondere Naturstein oder Beton, mit wenigstens einer Sägeeinheit (3), die wenigstens ein Sägeblatt (5) umfasst, und wenigstens einer Klemmvorrichtung (2) zum Ergreifen eines einzelnen Blocks (1), wobei Mittel vorgesehen sind, um diese Klemmvorrichtung (2) an der Sägeeinheit (3) entlangzubewegen, um den Block (1) in Scheiben zu sägen, insbesondere zur Anwendung des Verfahrens nach einem der Ansprüche 1 bis 8, **dadurch gekennzeichnet, dass** die Klemmvorrichtung (2) Finger (9) aufweist, die nebeneinander angeordnet sind und zwischen denen ein Block (1) festgehalten werden kann, wobei der Abstand zwischen nebeneinanderliegenden Fingern (9) wenigstens der Dicke des Sägeblatts (5) entspricht und wobei die Mittel derart sind, dass sie es ermöglichen, mit dem Sägeblatt (5) in dem betreffenden Block (1) zwischen zwei nebeneinanderliegenden Fingern (9) einen Sägeschnitt durchzuführen, wobei sich die Finger (9) parallel zum Sägeblatt (5) erstrecken, wobei die Klemmvorrichtung (2) zwei Gruppen von Fingern (9) aufweist, wobei die Finger einer Gruppe jenen der anderen Gruppe gegenüberliegen, so dass die Finger (9) beider Gruppen einen Raum umschließen, in dem ein einzelner Block (1) angeordnet werden kann, wobei die Finger (9) unabhängig voneinander gegen die Oberfläche des Blocks (1) gedrückt werden können, so dass die gebildeten Scheiben nach dem Sägen parallel zueinander zwischen den Fingern (9) der Klemmvorrichtung (2) festgehalten werden.

10. Vorrichtung nach Anspruch 9, **dadurch gekennzeichnet, dass** die Finger (9) der einen Gruppe in Bezug auf jene der anderen Gruppe bewegt werden können, um es zu ermöglichen, den Block (1) in dem Raum zwischen beiden Gruppen nebeneinanderliegender Finger (9) festzuhalten.

11. Vorrichtung nach Anspruch 9 oder 10, **dadurch gekennzeichnet, dass** die Finger (9) unabhängig voneinander elastisch verformbar sind.

12. Vorrichtung nach einem der Ansprüche 9 bis 11, **dadurch gekennzeichnet, dass** die Mittel derart sind, dass sie es ermöglichen, die Klemmvorrichtung (2) gemäß einer Kreisbahn zu bewegen, wobei entlang dieser Kreisbahn aufeinanderfolgende Sägeeinheiten (3) vorgesehen sind, die jeweils wenigstens ein Sägeblatt (5) umfassen, wobei die Sägeblätter (5) einer Sägeeinheit (3) den entsprechenden Sägeschnitt, der von den Sägeblättern (5) der vorhergehenden Sägeeinheit (3) zwischen den Fingern (9) hergestellt wurde, weiter vertiefen.

13. Vorrichtung nach einem der Ansprüche 9 bis 12, **dadurch gekennzeichnet, dass** die Mittel so gestaltet sind, dass die Klemmvorrichtung (2) in einer praktisch vertikalen Ebene an der Sägeeinheit (3) entlangbewegt wird.

14. Vorrichtung nach einem der Ansprüche 9 bis 13, **dadurch gekennzeichnet, dass** Positioniermittel vorgesehen sind, um den Block (1) in eine vorbestimmte Position in Bezug auf die Klemmvorrichtung (2) zu bringen.

15. Vorrichtung nach einem der Ansprüche 9 bis 14, **dadurch gekennzeichnet, dass** sie einen Anschlag (15) umfasst, der mit der Klemmvorrichtung (2) zusammenwirkt.

16. Vorrichtung nach Anspruch 15, **dadurch gekennzeichnet, dass** Transportmittel (14) vorgesehen sind, um den Block (1) in einer Richtung, die quer zur Ebene der Sägeblätter (5) ist, gegen den Anschlag (15) zu bewegen.

17. Vorrichtung nach einem der Ansprüche 9 bis 16, **dadurch gekennzeichnet, dass** die Seite der Finger (9), die gegen einen Block (1) zu drücken ist, mit einem elastischen Material, insbesondere mit Gummi, beschichtet ist.

18. Vorrichtung nach einem der Ansprüche 9 bis 17, **dadurch gekennzeichnet, dass** die Finger (9) aus Federstahl hergestellt sind.

## Revendications

1. Procédé pour scier des blocs (1) de pierre naturelle, de béton ou de pierre en général, dans lequel un bloc (1) est saisi individuellement et est déplacé le long d'au moins une unité de sciage (3) équipée d'au moins une lame de scie (5) dans le but de scier ce bloc (1) en tranches, dans lequel ledit bloc (1) est saisi avec une pince (2) pourvue de doigts (9) qui est déplacée avec ledit bloc (1) le long de l'unité de sciage (3), de telle sorte que le bloc (1) soit serré des deux côtés de ladite lame de scie (5) lorsqu'un trait de scie est pratiqué dans le bloc (1), les doigts (9) s'étendant parallèlement à ladite lame de scie (5), **caractérisé en ce que** ladite pince (2) comporte deux groupes de doigts, dans lequel les doigts d'un premier groupe sont opposés aux doigts de l'autre groupe de telle sorte que le bloc (1) soit serré dans l'espace défini par les deux groupes de doigts, dans lequel les doigts (9) sont pressés contre la surface du bloc (1) indépendamment les uns des autres, et dans lequel les tranches formées après le sciage sont maintenues parallèles les unes aux autres entre les doigts (9) de la pince (2).

2. Procédé selon la revendication 1, **caractérisé en ce que** lesdits doigts (9) se déforment élastiquement, indépendamment les uns des autres, lorsque ledit bloc (1) est saisi.

3. Procédé selon la revendication 1 ou la revendication 2, **caractérisé en ce que** ladite pince (2) suit une courbe, de préférence un trajet fermé, en particulier un trajet circulaire, pendant le déplacement le long de ladite unité de sciage (3).

4. Procédé selon l'une quelconque des revendications 1 à 3, **caractérisé en ce que** ladite pince (2) suit un trajet circulaire le long d'unités de sciage successives (3) qui sont montées le long de ce trajet circulaire, de telle sorte que les lames de scie (5) d'une unité de sciage (3) suivante approfondissent davantage le trait de scie correspondant qui a été formé par les lames de scie (5) de l'unité de sciage (3) précédente.

5. Procédé selon la revendication 4, **caractérisé en ce que** la pince (2) suit un trajet circulaire qui est situé dans plan vertical.

6. Procédé selon l'une quelconque des revendications 1 à 5, **caractérisé en ce que** ledit bloc (1) est placé contre un arrêt (15) avant d'être saisi par ladite pince (2).

7. Procédé selon la revendication 6, **caractérisé en ce que** ledit bloc (1) est poussé contre ledit arrêt (15) dans une direction qui est transversale au plan desdites lames de scie (5), dans lequel ce bloc (1) est ensuite saisi par ladite pince (2) et est guidé le long de ladite unité de sciage (3).

8. Procédé selon l'une quelconque des revendications 1 à 5, **caractérisé en ce que** ledit bloc (1) est centré par rapport à une référence dans une direction qui est transversale à la direction de déplacement de ladite pince (2) avant que le bloc (1) soit saisi par la pince (2) et soit déplacé le long de l'unité de sciage (3).

9. Dispositif pour scier des blocs (1) de pierre, en particulier de pierre naturelle ou de béton, comprenant au moins une unité de sciage (3) comportant au moins une lame de scie (5) et au moins une pince (2) pour saisir un bloc individuel (1), dans lequel des moyens sont prévus pour déplacer cette pince (2) le long de ladite unité de sciage (3) dans le but de scier le bloc (1) en tranches, plus particulièrement pour appliquer le procédé selon l'une quelconque des revendications 1 à 8, **caractérisé en ce que** ladite pince (2) comporte des doigts (9) disposés les uns à côté des autres et entre lesquels un bloc (1) peut être maintenu, dans lequel la distance entre les doigts (9) disposés les uns à côté des autres est au moins égale à l'épaisseur de ladite lame de scie (5), et dans lequel lesdits moyens sont conçus de telle sorte qu'ils permettent de pratiquer un trait de scie avec la lame de scie (5) dans ledit bloc (1) concerné entre deux doigts (9) situés l'un à côté de l'autre, dans lequel les doigts (9) s'étendent parallèlement à ladite lame de scie (5), ladite pince (2) comportant deux groupes de doigts (9), dans lequel les doigts d'un premier groupe sont opposés à ceux de l'autre groupe de telle sorte que les doigts (9) des deux groupes définissent un espace dans lequel un bloc individuel (1) peut être placé, dans lequel les doigts (9) peuvent être pressés contre la surface du bloc (1) indépendamment les uns des autres, de telle sorte que les tranches formées après le sciage soient maintenues parallèles les unes aux autres entre les doigts (9) de la pince (2).

10. Dispositif selon la revendication 9, **caractérisé en ce que** les doigts (9) d'un premier groupe peuvent être déplacés par rapport aux doigts de l'autre groupe dans le but de permettre le maintien dudit bloc (1) dans ledit espace entre les deux groupes de doigts (9) situés l'un à côté de l'autre.

11. Dispositif selon la revendication 9 ou la revendication 10, **caractérisé en ce que** lesdits doigts (9) sont élastiquement déformables indépendamment les uns des autres.

12. Dispositif selon l'une quelconque des revendications 9 à 11, **caractérisé en ce que** lesdits moyens sont conçus de telle sorte qu'ils permettent le déplacement de la pince (2) suivant un trajet circulaire, dans lequel des unités de sciage successives (3) sont disposées le long de ce trajet circulaire et comprennent chacune au moins une lame de scie (5), dans lequel les lames de scie (5) d'une unité de sciage (3) approfondissent davantage le trait de scie correspondant qui a été pratiqué par les lames de scie (5) de l'unité de sciage précédente (3) entre lesdits doigts (9).

13. Dispositif selon l'une quelconque des revendications 9 à 12, **caractérisé en ce que** lesdits moyens sont conçus de telle sorte que ladite pince (2) soit déplacée dans un plan pratiquement vertical le long de ladite unité de sciage (3).

14. Dispositif selon l'une quelconque des revendications 9 à 13, **caractérisé en ce que** des moyens de positionnement sont prévus pour placer ledit bloc (1) dans une position prédéterminée par rapport à la pince (2).

15. Dispositif selon l'une quelconque des revendications 9 à 14, **caractérisé en ce qu'**il comprend un arrêt (15) qui opère en conjonction avec ladite pince (2).

16. Dispositif selon la revendication 15, **caractérisé en ce que** des moyens de transport (14) sont prévus pour déplacer ledit bloc (1) contre ledit arrêt (15) dans une direction qui est transversale au plan desdites lames de scie (5).

17. Dispositif selon l'une quelconque des revendications 9 à 16, **caractérisé en ce que** le côté desdits doigts (9) qui doit être poussé contre un bloc (1) est revêtu d'une matière élastique, plus particulièrement de caoutchouc.

18. Dispositif selon l'une quelconque des revendications 9 à 17, **caractérisé en ce que** lesdits doigts (9) sont constitués d'acier à ressort.
